# EUROPÄISCHE PATENTSCHRIFT

(11) **EP 2 420 768 B1**
(45) Veröffentlichungstag und Bekanntmachung des Hinweises auf die Patenterteilung: **16.10.2019**
(21) Anmeldenummer: 11173691.4
(22) Anmeldetag: 12.07.2011
(51) Int. Cl.: F25D 3/06

(54) **Verfahren zum Kühlen eines Speisentransportwagens und Tabletttransportwagen zur Durchführung des Verfahrens**
Method for cooling a food transport vehicle and tray transport vehicle for executing the method
Procédé de réfrigération d'un véhicule de transport de produits alimentaires et véhicule approprié à la mise en oeuvre du procédé

(30) Priorität: 16.07.2010 DE 102010027541
(43) Veröffentlichungstag der Anmeldung: 22.02.2012
(73) Patentinhaber: HUPFER Metallwerke GmbH & Co. KG, 48653 Coesfeld (DE)
(72) Erfinder: Schumacher Helmut, 48653 Coesfeld (DE)
(74) Vertreter: Lorenz, Bernd Ingo Thaddeus

(56) Entgegenhaltungen:
- US-A- 1 894 014
- US-A- 2 024 052
- US-A- 2 790 308
- US-A- 4 671 079

## Beschreibung

Die Erfindung betrifft ein Verfahren zum Kühlen eines Speisentransportwagens, der mindestens einen Kältemittelspeicher mit einem Hohlraum zur Aufnahme eines Kältemittels aufweist. Der Begriff "Speisentransportwagen" umfasst sowohl Tabletttransportwangen für Tabletts, die mit Geschirrkomponenten und darauf angerichteten Speisen bestückt sind, als auch andere fahrbare Transporteinrichtungen, die im Rahmen der Speisenregenerierung und Speisenverteilung, Verwendung finden und ein Gehäuse oder ein Behältnis mit einem zu kühlenden Innenraum aufweisen.

In Großküchenbetrieben, beispielsweise in Krankenhäusern, werden die Mahlzeiten häufig weit vor dem Verzehrzeitpunkt zubereitet und zusammengestellt. Von diesem Zeitpunkt an müssen sie bis zum Verzehr kühl gelagert werden. Für einen Transport von der Küche bis zum Ort der Speisenausgabe werden Speisentransportwagen, insbesondere Tabletttransportwagen, eingesetzt, deren Wageninnenraum gekühlt wird. Zur Kühlung werden häufig passive Systeme mit einem Kältemittelspeicher verwendet.

Es ist bekannt, zur Kühlung eines Speisentransportwagens vorgekühlte eutektische Platten oder vorgekühlte Kühlakkus zu verwenden, die in Halterungen im Innenraum des Transportwagens eingesetzt werden (DE 298 13 189 U1). Nachteilig ist, dass die als Kältespeicher verwendeten Kühlakkus oder eutektischen Platten ebenso wie die Halterungen, in die sie eingesetzt werden, regelmäßig gereinigt werden müssen. Ferner werden Einrichtungen zur Tiefkühlung der eutektischen Platten bzw. Kühlakkus benötigt und die vorgekühlten Kältespeicher müssen bei der Speisenbestückung des Transportwagens bereitgehalten und in den Speisentransportwagen eingebaut werden. Die Handhabung der eutektischen Platten und Kühlakkus ist unbefriedigend.

Es ist ferner bekannt, Trockeneis als Kältemittel zur passiven Kühlung des Innenraums eines Speisentransportwagens zu verwenden (DE 74 08 842). Das Trockeneis wird in Fächern des Speisentransportwagens eingefüllt. Das Trockeneis verdampft, wobei Kohlendioxid freigesetzt wird, welches durch Öffnungen in einer das Trockeneisfach begrenzenden Wandfläche in den Innenraum des Transportwagens strömt und dort eine gleichmäßige Kühlung der auf Tabletts befindlichen Speisen bewirkt. Für die Bereitstellung von Trockeneis ist eine aufwendige Logistik notwendig, weil es Großküchen von Krankenhäusern und dergleichen im Regelfall nicht möglich ist, eigene Trockeneiskapazitäten vorzuhalten. Auch die Handhabung des Trockeneises erfordert Fachkenntnisse und Schulungen des Personals.

Des Weiteren ist es bekannt, als Kältemittel zur Kühlung eines Speisentransportwagens Eis/Wassergemische, sogenanntes Flow-Ice, zu verwenden. Ein mit Flow-Ice betriebener Kältemittelspeicher ist mit einer Zu- und Abflussleitung für das Kältemittel ausgestattet. Um die Pumpfähigkeit des Eis/Wassergemisches zu erhalten, liegt der Eisanteil, dessen Schmelzeenthalpie zur Kühlung genutzt werden kann, bei nur 25 %. Der Rest besteht im Wesentlichen aus kaltem Wasser, das zur Kühlung einen geringen Beitrag leistet. Vergleicht man das Gewicht, welches für die Präsenz einer gewünschten Kältemenge benötigt wird, so ist das Gewicht eines mit Flow-Ice betriebenen Kältespeichers etwa fünfmal größer als das Gewicht einer eutektischen Platte bzw. eines Kühlakkus gleicher Kühlkapazität. Das als Kältemittel verwendet Eis/Wassergemisch enthält Zusatzkomponenten, die häufig nicht lebensmittelverträglich sind. Daher sollte die Befüllung eines Kältemittelspeichers mit Flow-Ice räumlich getrennt werden von dem Ort, wo der Speisentransportwagen mit Tabletts und darauf angerichteten Speisen bestückt wird.

Die US 1 894 014 betrifft ein Verfahren zum Kühlen eines wiederverschließbaren Aufnahmeraumes eines motorbetriebenen Kühlfahrzeuges, bei dem eine Kühlflüssigkeit in einem Kühlkreislauf umgepumpt wird. Der Kühlkreislauf umfasst einen Wärmetauscher, eine Pumpe und einen Flüssigkeitstank für die Kühlflüssigkeit. Als Kühlflüssigkeit wird eine wässrige Salzlösung verwendet. Zur Kühlung der Kühlflüssigkeit wird der Vorratstank teilweise mit Eis befüllt. Der Vorratstank enthält eine Eis/Wassermischung, wobei dem Wasser noch Salz zugemischt wird. Das Verfahren ähnelt dem mit Flow-Ice betriebenen Verfahren.

Die US 1 014 186 beschreibt eine stationäre Kühltheke mit einem Hohlraum zur Aufnahme eines Kältemittels. Als Kältemittel wird eine Sole verwendet, die durch Zugabe von zerkleinertem Eis auf Kühltemperatur gehalten wird. Zum Einfüllen des zerkleinerten Eises ist ein Fülltrichter an der Oberseite des Hohlraums vorgesehen. Für Speisentransportwagen ist das Konzept ungeeignet und hat die Nachteile eine Flow-Ice-Systems.

Aus der US-Patentveröffentlichung 973 082 aus dem Jahre 1910 ist schließlich ein Wagen zum Transport von Milchprodukten bekannt, in dessen Laderaum Kühlboxen mitgeführt werden, die mit Crushed-Ice gefüllt werden. Die Schmelzenthalpie des aus Wasser bestehenden Eises wird zur Kühlung genutzt, wobei sich in den Kühlboxen Schmelzwasser ansammelt. Die Kühlboxen müssen von Zeit zu Zeit aus dem Wagen entnommen und entleert werden. Nach der Entleerung der Kühlboxen können sie erneut mit Crushed-Ice beschickt werden. Das beschriebene Kühlkonzept ist nicht mehr zeitgemäß und kommt zur Kühlung moderner Speisentransportwagen nicht in Betracht.

Zudem beschreibt die US 4,671,079 ein Verfahren zum Kühlen eines wiederverschließbaren Aufnahmeraums, wobei Steinsalz zur Verbesserung der Kühlleistung verwendet wird.

Vor diesem Hintergrund liegt der Erfindung die Aufgabe zugrunde, ein Verfahren anzugeben, mit dem der Innenraum eines verschließbaren Transportwagens über einen angemessenen Gebrauchszeitraum wirksam gekühlt werden kann.

Gegenstand der Erfindung und Lösung dieser Aufgabe ist ein Verfahren nach Anspruch 1. Vorausgesetzt wird ein Speisentransportwagen, der mindestens einen Kältemittelspeicher mit einem Hohlraum zur Aufnahme eines Kältemittels aufweist. Erfindungsgemäß wird der Kältemittelspeicher vor einem bestimmungsgemäßen Einsatz des Speisentransportwagens mit schüttfähigem Eis, welches aus Wasser besteht, befüllt und wird verbrauchtes Kältemittel in Form von Schmelzwasser aus dem Kältemittelspeicher abgelassen.

Lagert man stückiges Eis, z. B. Crushed-Ice, längere Zeit und/oder bei falschen Temperaturen, neigt das Eis dazu, zu verklumpen. Eis, welches verklumpt, ist für das erfindungsgemäße Verfahren unbrauchbar. Als schüttfähiges Eis werden erfindungsgemäß vorzugsweise Eiswürfel mit einer Kantenlänge zwischen 5 mm und 10 mm verwendet. Sie werden auch als Microcubes bezeichnet. Das schüttfähige Eis weist bei der Befüllung des Kältemittelspeichers eine Temperatur von mehr als minus 2° C, vorzugsweise etwa 0° C auf.

Die Schüttfähigkeit des Eises ist unter anderem auch abhängig vom Kalkgehalt des Wassers, aus dem das Eis produziert wurde. Zur Verbesserung der Schüttfähigkeit kann das als Kältemittel verwendete Eis mit flüssigem Wasser besprüht oder benetzt werden. Vorzugsweise wird Wasser mit einer Temperatur zwischen null und 4° C zum Sprühen oder Benetzen des Eises verwendet. Scherbeneis ist ebenfalls ein schüttfähiges Eis und für das erfindungsgemäße Verfahren geeignet. Es besteht aus Eisplättchen, die je nach der Beschaffenheit des eingesetzten Trinkwassers eine Stärke von 1 bis 3 mm haben können.

Der Kältespeicher kann mit einer Mischung aus schüttfähigem Eis und Eiswasser befüllt wird, wobei das Eiswasser die Wände des Kältespeichers kühlt und vor einem bestimmungsgemäßen Gebrauch des Speisentransportwagens wieder abgelassen sowie durch schüttfähiges Eis ersetzt wird. Durch das zusätzlich zugeführte Eiswasser wird schon während des Befüllprozesses den Wänden des Kältespeichers die Restwärme entzogen. Dann abgelassen, wird die aufgenommene Wärmemenge mitgenommen und Platz für nachzuschüttendes Eis geschaffen. Das Eiswasser bzw. auch Schmelzwasser kann problemlos durch eine unterseitige Ablassöffnung des Kältespeichers, die mittels eines Handventils oder eines fernbetätigbaren Ventils geöffnet und verschlossen werden kann, abgelassen werden. Zum Zwecke der Energieeinsparung kann das abgelassene Wasser dem Kühlkreislauf wieder zugeführt werden.

Der Kältemittelspeicher kann durch mindestens eine oberseitige Öffnung befüllt werden wobei das Füllgut durch Gravitation nachrutscht und den Hohlraum des Kältemittelspeichers ausfüllt. Die Befüllung des Kältemittelspeichers mit schüttfähigem Eis geschieht durch das Eigengewicht desselben. Zur Unterstützung der Befüllung kann im Einfüllschacht eine Vorrichtung installiert werden, welche die Schüttfähigkeit des Eises aufrechterhält. Vorzugsweise werden Microcubes, d. h. Eiswürfel mit einer Kantenlänge zwischen 5 mm und 10 mm, verwendet, die ohnehin nur gering zum Verbacken neigen. Sollte es beim Nachsacken der Eiswürfel im Kältemittelspeicher Schwierigkeiten geben, so lässt sich der Füllprozess durch eine Vibrationseinrichtung oder durch eine von oben auf das Füllgut wirkende mechanische Auflockerung oder Komprimierung verbessern.

Die Trennung des Schmelzwassers von dem noch als Kältespeicher nutzbaren Resteis ist einfach. Das Schmelzwasser kann nach unten aus dem Kältespeicher abgelassen werden, wobei das Resteis nachsackt. Die in den Hohlraum des Kältespeichers eingefüllte Eismenge aus schüttfähigem Eis, insbesondere in Form von Microcubes, erzeugt eine definierte Oberfläche, die sich messtechnisch erfassen lässt. Gemäß einer bevorzugten Ausführung der Erfindung wird die im Kältespeicher enthaltene Füllmenge an schüttfähigem, noch ungeschmolzenem Eis durch Sensoren erfasst. Als Sensoren kommen beispielsweise mechanische Abtastvorrichtungen oder auch berührungslos arbeitende Einrichtungen, z. B. Radar- und Ultraschallsensoren, in Betracht. Die Sensoren können beispielsweise durch eine zusätzliche Öffnung in den Hohlraum eingeführt oder in diesem installiert werden. Wurde in einem Kühlzyklus nicht alles Eis verbraucht und wird die Schmelzwassermenge dann abgelassen, sackt das im Hohlraum noch enthaltene Resteis nach, wobei die Oberfläche sensorisch erfasst wird. Wird eine Kühlleistung aus z. B. 8 kg Eis für den nachfolgenden Prozess benötigt, so ist nur die nach dem Ergebnis der sensorischen Messung fehlende Differenzmenge nachzufüllen. Aus dem gemessenen Füllstand einer Resteismenge lässt sich bei bekannter Einfüllmenge im Rahmen empirischer Ermittlungen der tatsächliche Kältemittelverbrauch ermitteln. Dieser gibt zum einen eine sichere Kostenkontrolle, zum anderen aber auch Anhaltspunkte für die tatsächlich im Prozess, gegebenenfalls Jahreszeitenabhängig, benötigte Kältemenge. Geschickt gemanagt lässt sich aus diesen Zahlen eine vom Prozess abhängige Einfüllmenge so automatisiert bestimmen, dass tatsächlich auch immer nur die benötigte Menge eingefüllt wird. Da die einzufüllende Kältemenge in Korrelation zum Füllstand gebracht werden kann, entfallen Durchflussmengenzähler und ähnliche Einrichtungen.

Ein wesentlicher Vorteil des erfindungsgemäßen Verfahrens ist darin zu sehen, dass das schüttfähige Eis vorproduziert und insofern die Produktion von Eis und die Nutzung des schüttfähigen Eises zeitlich entkoppelt werden kann. Die Erzeugung von schüttfähigem Eis, insbesondere in Form von Microcubes, ist ein technisch ausgereiftes Verfahren mit vergleichsweise geringen Investitionskosten, wobei auch kleine Kältemaschinen verfügbar sind. Die Kältemaschine für die Erzeugung von schüttfähigem Eis kann an eine vor Ort, z. B. in einer Großküche oder in einem Krankenhaus ohnehin meistens bereit gehaltene Kälteanlage angeschlossen werden. Eine Kälteanlage für die Eiserzeugung ist ein handelsübliches Produkt und kann von normalen Servicefirmen gewartet werden. Das schüttfähige Eis kann z. B. während der Nachtstunden durch Ausnutzung günstiger Stromtarife kostengünstig produziert werden. Für die Befüllung eines Speisentransportwagens werden Füllstationen bereitgestellt, die mit ausreichend großen Speicherkapazitäten für das produzierte Eis ausgestattet sind. Die Befüllung des Kältemittelspeichers der Speisentransportwagen mit schüttfähigem Eis kann weitgehend automatisiert werden.

Das erfindungsgemäße Verfahren nutzt durch Verwendung eines aus Wasser bestehenden schüttfähigen Eises die große Schmelzenthalpie von Wasser als Kältespeicher. Wasser ist ein vollständig lebensmittelneutrales, umweltfreundliches und kostengünstiges Kältemittel, das stets zur Verfügung steht. Da es sich bei Wasser um ein lebensmittelneutrales Medium handelt, kann die Befüllung des Kältemittelspeichers mit schüttfähigem Eis ebenso wie die Bestückung eines Speisentransportwagens im Küchenbereich durchgeführt werden. Dadurch entfallen zusätzliche Arbeitsgänge. Durch die Verwendung von schüttfähigem Eis als Kältemittel steht pro Gewichtseinheit Kältemittel die volle Schmelzenthalpie von Wasser zur Verfügung. Die mitzuführende Kältemittelmenge ist im Vergleich zu Flow-Ice sehr gering und vergleichbar mit eutektischen Platten, die bei Temperaturen von etwa minus 18° vorgefrostet sind.

Speisentransportwagen werden vornehmlich in Krankenhäusern zur Speisenverteilung verwendet. Um große Zentralküchen, z. B. in Krankenhäusern wirtschaftlich betreiben zu können, ist es gebräuchlich, dass die Zentralküche eines Krankenhauses auch Außenstellen, z. B. in Altenheimen, mit versorgt. Für den Transport in Kraftfahrzeugen werden Großgebinde eingesetzt, die sich hinsichtlich ihrer Geometrie und Handhabung von einem Tablett-Transportwagen unterscheiden. Das erfindungsgemäße Verfahren ist auch für solche Transporteinrichtungen für Speisen nutzbar und setzt lediglich voraus, dass die Transporteinrichtung mindestens einen Kältemittelspeicher mit einem Hohlraum zur Aufnahme von schüttfähigem Eis und zum Ablassen von Schmelzwasser aufweist. Der Kältemittelspeicher kann aufgrund der sehr einfachen Einfüll- und Ablassöffnungen unproblematisch gereinigt werden, wobei die Reinigung zusammen mit der Reinigung des Speisentransportwagens in gebräuchlichen Waschanlagen durchgeführt werden kann.

Gegenstand der Erfindung ist ferner ein Tabletttransportwagen nach Anspruch 6 zur Durchführung des beschriebenen Verfahrens. Zum grundsätzlichen Aufbau des Tabletttransportwagens gehören ein verschließbarer Aufnahmeraum, sowie mindestens ein Kältemittelspeicher zur Kühlung des Aufnahmeraums, mit einem Hohlraum für ein Kältemittel. Der Aufnahmeraum des Tabletttransportwagens weist Fächer zur Aufnahme von Tabletts auf, auf denen jeweils eine komplette, für eine Person zusammengestellte Mahlzeit angerichtet wird. Der Hohlraum des Kältemittelspeichers des Speisentransportwagens weist eine Füllöffnung zum Befüllen mit schüttfähigem Eis und eine mit einem Ventil verschlossene Ablassöffnung für Schmelzwasser auf. Erfindungsgemäß besteht der Hohlraum des Kältemittelspeichers aus einem vertikalen Schacht und ist in einer Zwischenwand, welche den Aufnahmeraum in mindesten zwei Bereiche unterteilt, angeordnet. Die Zusatzinstallation für das Betreiben des erfindungsgemäßen Verfahrens ist nicht sehr aufwendig und kann bei entsprechenden Stückzahlen der Tabletttransportwagen hinsichtlich der Investitionskosten nahezu kostenneutral durchgeführt werden.

Der Hohlraum für den Kältemittelspeicher besteht im einfachsten Fall aus einem vertikalen Schacht, der über die gesamte Höhe einen im Wesentlichen konstanten Querschnitt aufweist. Durch eine hiervon abweichende Gestaltung des Hohlraumes kann die Kühlung des Innenraums optimiert werden. Der Hohlraum des Kältemittelspeichers kann insbesondere so gestaltet werden, dass in einem oberen Bereich des Tabletttransportwagens, wo im Allgemeinen mehr Kälteenergie benötigt wird, eine größere Füllmenge Eis zur Verfügung steht als im unteren Bereich, wo sie nicht oder weniger benötigt wird. Der Hohlraum kann beispielsweise trichterförmig ausgebildet sein.

Während des Schmelzprozesses kommt es zu einem Aufschwimmen des Eises, so dass sich die Kälte bevorzugt im oberen Bereich des Tabletttransportwagens befindet und von dort ausgehend auf den Innenraum des Tabletttransportwagen verteilt wird. Bei der passiven Kühlung besteht immer die Aufgabe, auch die oberen Etagen des Tabletttransportwagens zu kühlen bzw. eine gleichmäßige Temperaturverteilung zu erreichen. Insofern begünstigt der vorstehend beschriebene Aufschwimmprozess eine Temperaturgleichverteilung im Innenraum des Transportwagens.

Um das Eis während des Schmelzprozesses oben oder an definierten Stellen zu halten, kann der Hohlraum erfindungsgemäß ein siebartiges Trennelement enthalten, welches das Eis in definierter Höhe hält und Schmelzwasser durchlässt. Eine weitere vorteilhafte Ausführung der Erfindung sieht vor, dass der Hohlraum des Kältemittelspeichers einen Siebeinsatz zur Aufnahme des schüttfähigen Eises aufweist. Der Siebeinsatz bzw. die Gitterstruktur des Trennelementes nehmen das Gewicht des schüttfähigen Eises auf und entlasten die Seitenwände des Hohlraumes, so dass diese dünnwandig aus Kunststoff oder aus dünnen Blechen gefertigt werden können. Durch eine Unterteilung des Hohlraumes in horizontaler oder vertikaler Richtung können die Einfüllfächer sowie die Einfüllmengen für das schüttfähige Eis variiert und an den konkreten Anwendungsfall angepasst werden. Das Schmelzwasser kann jederzeit abgelassen und durch frisches schüttfähiges Eis ersetzt werden. Dadurch kann der Speisentransportwagen über lange Zeiträume im Kühlbetrieb eingesetzt werden.

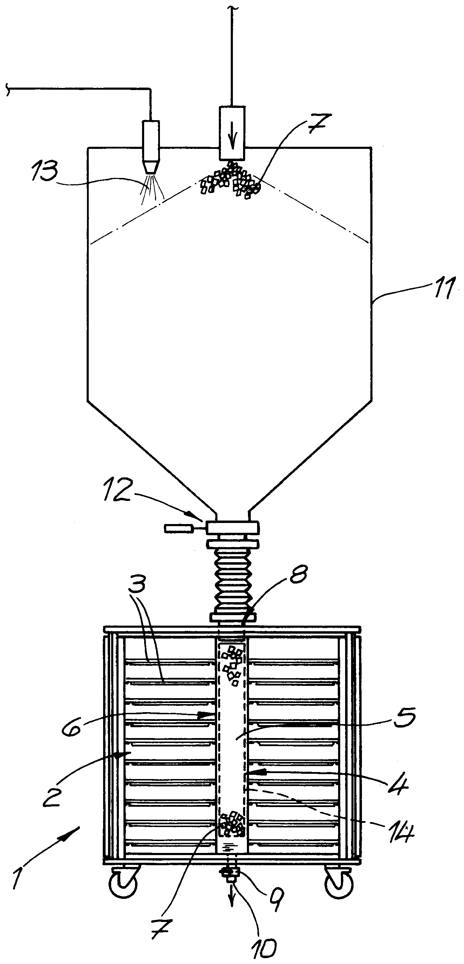

Im Folgenden wird das erfindungsgemäße Verfahren anhand eines Ausführungsbeispiels erläutert. Die einzige Figur zeigt schematisch eine Vorrichtung zur Durchführung des erfindungsgemäßen Verfahrens.

In der Figur ist ein Speisentransportwagen 1, speziell ein Tabletttransportwagen, dargestellt mit einem verschließbaren Aufnahmeraum 2 für Träger 3, auf denen zu kühlende Speisen angerichtet sind, und mit mindestens einem Kältemittelspeicher 4 zur Kühlung des Aufnahmeraums. Der Kältemittelspeicher 4 weist einen Hohlraum 5 für ein Kältemittel auf. Der Hohlraum 5 des Kältemittelspeichers 4 kann beispielsweise in einer Zwischenwand 6, welche den Aufnahmeraum 2 in zwei Bereiche unterteilt, angeordnet sein.

Der Kältemittelspeicher 4 des Speisentransportwagens 1 wird mit schüttfähigem Eis 7, welches aus Wasser besteht, befüllt. Verbrauchtes Kältemittel kann in Form von Schmelzwasser aus dem Kältemittelspeicher 4 abgelassen werden. Entsprechend weist der Hohlraum 5 des Kältemittelspeichers 4 eine Füllöffnung 8 zum Befüllen mit schüttfähigem Eis sowie eine mit einem Ventil 9 verschlossene Ablassöffnung 10 für Schmelzwasser auf. Das Ventil 9 kann als Handventil oder als fernbetätigbares Ventil ausgebildet sein.

Als schüttfähiges Eis 7 werden insbesondere Eiswürfel mit einer Kantenlänge zwischen 5 mm und 10 mm, sogenannte Microcubes verwendet. Das schüttfähige Eis 7 wird vorproduziert und zur weiteren Verwendung zwischengelagert. Zur Zwischenlagerung ist ein thermisch isoliertes Silo 11 vorgesehen, dessen Abgabeöffnung durch eine Verschlusseinrichtung 12, z. B. in Form eines mit einem Stellantrieb versehenen Schiebers, ausgestattet ist.

Der Kältemittelspeicher 4 des Speisentransportwagens 1 wird durch mindestens eine oberseitige Öffnung 8 befüllt, wobei das Füllgut durch Gravitation nachrutscht und den Hohlraum 5 des Kältemittelspeichers 4 ausfüllt.

Das schüttfähige Eis weist bei der Befüllung des Kältemittelspeichers eine Temperatur von etwa 0° C auf. Um die Schüttfähigkeit des Eises zu erhalten, wird das Eis innerhalb des Zwischenspeichers oder beim Austrag mit flüssigem Wasser 13 besprüht oder benetzt.

Der Hohlraum des Kältemittelspeichers des Speisentransportwagens enthält im Ausführungsbeispiel einen Siebeinsatz 14 zur Aufnahme des schüttfähigen Eises 7. Es können auch siebartige Trennelemente vorgesehen werden, welche das Eis in definierter Höhe halten und Schmelzwasser durchlassen.

## Patentansprüche

1. Verfahren zum Kühlen eines verschließbaren Aufnahmeraums eines Speisentransportwagens, der mindestens einen Kältemittelspeicher (4) zur Kühlung des Aufnahmeraums mit einem Hohlraum (5) zur Aufnahme eines Kältemittels aufweist, wobei vor einem bestimmungsgemäßen Einsatz des Speisentransportwagens
(i) der Kältemittelspeicher (4) durch mindestens eine oberseitige Öffnung mit schüttfähigem Eis (7), welches aus Wasser besteht, befüllt wird, wobei das Füllgut durch Gravitation nachrutscht und den Hohlraum (5) des Kältemittelspeichers (4) ausfüllt, oder
(ii) der Kältemittelspeicher (4) mit einer Mischung aus schüttfähigem Eis (7) und Eiswasser befüllt wird, wobei das Eiswasser die Wände des Kältemittelspeichers (4) kühlt und vor dem bestimmungsgemäßen Gebrauch des Speisentransportwagens (1) wieder abgelassen sowie durch schüttfähiges Eis ersetzt wird,
wobei das als Kältemittel verwendete Eis (7) zur Verbesserung seiner Schüttfähigkeit mit flüssigem Wasser (13) besprüht oder benetzt wird und wobei verbrauchtes Kältemittel in Form von Schmelzwasser aus dem Kältemittelspeicher (4) abgelassen wird.

2. Verfahren nach Anspruch 1, **dadurch gekennzeichnet, dass** als schüttfähiges Eis (7) Eiswürfel mit einer Kantenlänge zwischen 5 mm und 10 mm verwendet werden.

3. Verfahren nach Anspruch 1 oder 2, **dadurch gekennzeichnet, dass** das schüttfähige Eis (7) bei der Befüllung des Kältemittelspeichers (4) eine Temperatur von mehr als minus 2° C, vorzugsweise etwa 0° C, aufweist.

4. Verfahren einem der Ansprüche 1 bis 3, **dadurch gekennzeichnet, dass** die im Kältemittelspeicher (4) enthaltene Füllmenge an schüttfähigem, noch ungeschmolzenem Eis (7) durch Sensoren erfasst wird.

5. Verfahren nach einem der Ansprüche 1 bis 4, **dadurch gekennzeichnet, dass** das schüttfähige Eis (7) vorproduziert und zum Zwecke einer Befüllung des Kältemittelspeichers (4) zwischengelagert wird.

6. Tabletttransportwagen zur Durchführung des Verfahrens nach einem der Ansprüche 1 bis 5, mit
einem wiederverschließbaren Aufnahmeraum (2) und
mindestens einem Kältemittelspeicher (4) mit einem Hohlraum (5) für ein Kältemittel zur Kühlung des Aufnahmeraums (2),
wobei der Hohlraum (5) des Kältemittelspeichers (4) eine Füllöffnung (8) zum Befüllen mit schüttfähigem Eis (7) und eine mit einem Ventil (9) verschlossene Ablassöffnung (10) für Schmelzwasser aufweist, wobei der Hohlraum (5) des Kältemittelspeichers (4) aus einem vertikalen Schacht besteht und in einer Zwischenwand (6), welche den Aufnahmeraum (2) in mindestens zwei Bereiche unterteilt, angeordnet ist und wobei der Aufnahmeraum (2) Fächer aufweist zur Aufnahme von Tabletts (3), die mit Geschirrkomponenten und darauf angerichteten Speisen bestückt sind.

7. Tabletttransportwagen nach Anspruch 6, **dadurch gekennzeichnet, dass** der Hohlraum (5) des Kältemittelspeichers (4) einen Siebeinsatz (14) zur Aufnahme des schüttfähigen Eises oder ein siebartiges Trennelement, welches das Eis in definierter Höhe hält und Schmelzwasser durchlässt, aufweist.

## Claims

1. A method for cooling a closable accommodation space of a food transport cart which has at least one coolant reservoir (4) comprising a cavity (5) for accommodating a coolant for cooling the accommodation space, wherein prior to an intended use of the food transport cart
(i) the coolant reservoir (4) is filled through at least one top opening with pourable ice (7) which consists of water, wherein the filling material slips down due to gravity and fills in the cavity (5) of the coolant reservoir (4), or
(ii) the coolant reservoir (4) is filled with a mixture of pourable ice (7) and ice water, wherein the ice water cools the walls of the coolant reservoir (4) and is discharged again and replaced with pourable ice prior to the intended use of the food transport cart (1),
wherein the ice (7) used as a coolant is sprayed or wetted with liquid water (13) to improve its pourability, and wherein used coolant in the form of melt water is discharged out of the coolant reservoir (4) .

2. The method according to claim 1, **characterized in that** ice cubes with an edge length between 5 mm and 10 mm are used as the pourable ice (7).

3. The method according to claim 1 or 2, **characterized in that** the pourable ice (7) has a temperature of more than minus 2 °C, preferably approximately 0 °C when filling the coolant reservoir (4).

4. The method according to any one of claims 1 to 3, **characterized in that** the filling amount of pourable, not-yet-melted ice (7) contained in the coolant reservoir (4) is detected by sensors.

5. The method according to any one of claims 1 to 4, **characterized in that** the pourable ice (7) is pre-prepared and temporarily stored for the purpose of filling the coolant reservoir (4).

6. A tray transport cart for carrying out the method according to any one of claims 1 to 5, comprising
a re-closable accommodation space (2) and
at least one coolant reservoir (4) comprising a cavity (5) for a coolant for cooling the accommodation space (2),
wherein the cavity (5) of the coolant reservoir (4) has a fill opening (8) for filling with pourable ice (7) and a drain hole (10), sealed by a valve (9), for melt water, wherein the cavity (5) of the coolant reservoir (4) consists of a vertical shaft and is arranged in a partition (6) which divides the accommodation space (2) into at least two areas, and wherein the accommodation space (2) has compartments for accommodating trays (3) which are loaded with dishes and on which food is served.

7. The tray transport cart according to claim 6, **characterized in that** the cavity (5) of the coolant reservoir (4) has a sieve insert (14) for accommodating the pourable ice, or a sieve-like separating element, which holds the ice at a defined height a permits the melt water through.

## Revendications

1. Procédé pour la réfrigération d'un espace de réception pouvant être fermé d'un véhicule de transport d'aliments, lequel présente au moins un réservoir de réfrigérant (4) pour la réfrigération de l'espace de réception avec un espace creux (5) pour la réception d'un réfrigérant, dans lequel, avant une utilisation conforme du véhicule de transport d'aliments,
(i) le réservoir de réfrigérant (4) est rempli, à travers au moins une ouverture du côté supérieur, avec de la glace apte au versement (7), laquelle se compose d'eau, dans lequel la matière de remplissage descend par gravitation et remplit l'espace creux (5) du réservoir de réfrigérant (4),
(ii) le réservoir de réfrigérant (4) est rempli avec un mélange de glace apte au versement (7) et d'eau glacée, dans lequel l'eau glacée refroidit les parois du réservoir de réfrigérant (4) et est de nouveau évacuée avant l'utilisation conforme du véhicule de transport d'aliments (1) ainsi que remplacée par de la glace apte au versement,
dans lequel la glace (7) utilisée en tant que réfrigérant est aspergée ou humectée avec de l'eau liquide (13) pour l'amélioration de son aptitude au versement, et dans lequel du réfrigérant usagé est évacué du réservoir de réfrigérant (4) sous la forme d'eau de fonte.

2. Procédé selon la revendication 1, **caractérisé en ce que** l'on utilise, en guise de glace apte au versement (7), des cubes de glace avec une longueur d'arête comprise entre 5 mm et 10 mm.

3. Procédé selon la revendication 1 ou 2, **caractérisé en ce que** la glace apte au versement (7) présente, lors du remplissage du réservoir de réfrigérant (4), une température de plus de moins 2 °C, de préférence de près de 0 °C.

4. Procédé selon l'une des revendications 1 à 3, **caractérisé en ce que** la quantité de remplissage avec de la glace (7) apte au versement encore non fondue contenue dans le réservoir de réfrigérant (4) est détectée par des capteurs.

5. Procédé selon l'une des revendications 1 à 4, **caractérisé en ce que** la glace apte au versement (7) est produite à l'avance et est stockée de façon intermédiaire pour les besoins d'un remplissage du réservoir de réfrigérant (4).

6. Véhicule de transport de plateaux pour la mise en oeuvre du procédé selon l'une des revendications 1 à 5, avec
un espace de réception refermable (2) et
au moins un réservoir de réfrigérant (4) avec un espace creux (5) pour un réfrigérant pour réfrigérer l'espace de réception (2),
dans lequel l'espace creux (5) du réservoir de réfrigérant (4) présente une ouverture de remplissage (8) pour le remplissage avec de la glace apte au versement (7) et une ouverture d'évacuation (10) fermée avec une vanne (9) pour de l'eau de fonte, dans lequel l'espace creux (5) du réservoir de réfrigérant (4) se compose d'un puits vertical et est disposé dans une paroi intermédiaire (6), laquelle partage l'espace de réception (2) en au moins deux zones, et dans lequel l'espace de réception (2) présente des compartiments pour recevoir des plateaux (3) garnis d'éléments de vaisselle et d'aliments disposés dessus.

7. Véhicule de transport de plateaux selon la revendication 6, **caractérisé en ce que** l'espace creux (5) du réservoir de réfrigérant (4) présente un habillage de tamisage (14) pour la réception de la glace apte au versement ou un élément de séparation semblable à un tamis, lequel maintient la glace à une hauteur définie et laisse passer l'eau de fonte.
